(19) Europäisches Patentamt
European Patent Office
Office européen des brevets

(11) **EP 4 207 048 A1**

(12) **EUROPEAN PATENT APPLICATION**
published in accordance with Art. 153(4) EPC

(43) Date of publication:
**05.07.2023 Bulletin 2023/27**

(51) International Patent Classification (IPC):
***G06T 3/00*** *(2006.01)*          ***G06T 5/00*** *(2006.01)*
***G06T 1/00*** *(2006.01)*

(21) Application number: **21927457.8**

(22) Date of filing: **29.06.2021**

(86) International application number:
**PCT/CN2021/103249**

(87) International publication number:
**WO 2022/179026 (01.09.2022 Gazette 2022/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **23.02.2021 CN 202110203295**

(71) Applicant: **Beijing Sensetime Technology
Development Co., Ltd.
Haidian Beijing 100080 (CN)**

(72) Inventor: **SU, Liu
Beijing 100080 (CN)**

(74) Representative: **Lavoix
Bayerstraße 83
80335 München (DE)**

(54) **IMAGE PROCESSING METHOD AND APPARATUS, ELECTRONIC DEVICE, AND STORAGE MEDIUM**

(57)     The disclosure relates to a method and device for image processing, an electronic device and a storage medium. The method comprise: in response to a beauty makeup operation for a target part of a face image, extracting an original color of at least one pixel in the target part of the face image; acquiring luminance information of the at least one pixel in the target part; determining a target color of the at least one pixel in the target part based on the original color and the luminance information; and obtaining a fused face image by fusing the original color and the target color of the at least one pixel in the target part.

FIG. 1

**Description**

CROSS-REFERENCE TO RELATED APPLICATION

The present application claims priority to Chinese Patent Application No. 202110203295.2 field on February 23, 2021 in China National Intellectual Property Administration, and entitled "METHOD AND DEVICE FOR IMAGE PROCESSING, ELECTRONIC DEVICE AND STORAGE MEDIUM", which is incorporated herein by reference in its entirety.

TECHNICAL FIELD

The disclosure relates to the field of computer vision, in particular, to a method and a device for image processing, an electronic device and a storage medium.

BACKGROUND

Lip makeup refers to the beauty makeup for the lip, and the lip with lip makeup retouching is generally pure and shiny. With the development of computer vision technology, the processing performed on the image including the lip part to obtain the image processed by lip makeup has been more and more widely used in people's daily life. However, with the increasing types of lip makeup, how to make the image after lip makeup processing similar to the gloss effect after natural lip makeup processing is still an urgent problem to be solved.

SUMMARY

The present disclosure provides a scheme for image processing.
According to an aspect of the present disclosure, a method for image processing is provided. The method includes:
in response to a beauty makeup operation for a target part of a face image, extracting an original color of at least one pixel in the target part of the face image; acquiring luminance information of the at least one pixel in the target part; determining a target color of the at least one pixel in the target part based on the original color and the luminance information; and obtaining a fused face image by fusing the original color and the target color of the at least one pixel in the target part.
In a possible implementation, the operation of determining the target color of the at least one pixel in the target part based on the original color and the luminance information includes: determining an initial target color of the at least one pixel in the target part by performing color search for the original color of the at least one pixel in the target part according to a selected color in the beauty makeup operation, herein the initial target color matches the original color; and obtaining the target color of the at least one pixel in the target part by adjusting the initial target color based on the luminance information.
In a possible implementation, the luminance information comprises at least one of: a first luminance, a second luminance, or a third luminance. The operation of acquiring the luminance information of the at least one pixel in the target part includes: identifying a processing type of the beauty makeup operation, and extracting at least one of the first luminance, the second luminance, or the third luminance of the at least one pixel in at least one processing manner according to the processing type. The at least one processing manner comprises at least one of determining the first luminance of the pixel according to the original color of the pixel; acquiring the second luminance of the pixel having a target luminance in a preset processing range according to the preset processing range of the pixel in the target part; or filtering the pixel through a preset convolution kernel, and determining the third luminance of the pixel according to a middle color obtained by filtering the pixel, wherein a filtering range of the preset convolution kernel is same as the preset processing range.
In a possible implementation, the processing type includes a matte lighting effect, and the luminance information comprises the first luminance and the third luminance. The operation of obtaining the target color of the at least one pixel in the target part by adjusting the initial target color based on the luminance information includes: in a case where the first luminance is greater than a preset luminance threshold, obtaining the target color of the pixel by adjusting the initial target color of the pixel according to the first luminance and the preset luminance threshold; or in a case where the first luminance is less than or equal to the preset luminance threshold, obtaining the target color of the pixel by adjusting the initial target color of the pixel according to the first luminance and the third luminance.
In a possible implementation, the processing type comprises a hydrating light effect; the luminance information comprises: the first luminance, the second luminance, and the third luminance. The operation of obtaining the target color of the at least one pixel in the target part by adjusting the initial target color based on the luminance information includes: in a case where the first luminance is greater than the third luminance, obtaining the target color of the pixel by adjusting the initial target color of the pixel according to the first luminance, the second luminance, the third luminance and a preset luminance radius; or in a case where the first luminance is less than or equal to the third luminance, determining the initial target color of the pixel as the target color of the pixel.

In a possible implementation, the processing type comprises a flashing light effect; the luminance information comprises: the first luminance, the second luminance, and the third luminance. The operation of obtaining the target color of the at least one pixel in the target part by adjusting the initial target color based on the luminance information includes: in a case where the first luminance is greater than the third luminance, obtaining the target color of the pixel by adjusting the initial target color of the pixel according to the first luminance, the second luminance, the third luminance and a preset luminance radius; or in a case where the first luminance is less than or equal to the third luminance, generating a random value within a first preset value range; and obtaining the target color of the at least one pixel in the target part by adjusting the initial target color according to the random value.

In a possible implementation, the operation of obtaining the target color of the at least one pixel in the target part by adjusting the initial target color according to the random value includes: in a case where the random value falls within the second preset value range, obtaining the target color of the pixel by adjusting the initial target color of the pixel according to the random value and a transparency of the pixel in the target material; or in a case where the random value falls outside the second preset value range, determining the initial target color of the pixel as the target color of the pixel.

In a possible implementation, the operation of performing color search for the original color of the at least one pixel in the target part according to the selected color in the beauty makeup operation, and determining the initial target color of the at least one pixel in the target part includes: acquiring a color lookup table corresponding to the selected color according to the selected color in the beauty makeup operation, wherein output colors in the color lookup table are arranged in a gradient form; searching for an output color corresponding to the original color of the at least one pixel in the target part in the color lookup table, and determining the output color as the initial target color of the at least one pixel in the target part.

In a possible implementation, the operation of obtaining the fused face image by fusing the original color and the target color of the at least one pixel in the target part includes: determining a first fusion ratio of the original color and a second fusion ratio of the target color according to a preset fusion intensity, respectively; and obtaining the fused face image by fusing the original color and the target color according to the first fusion ratio and the second fusion ratio.

In a possible implementation, the operation of in response to the beauty makeup operation for the target part of the face image, extracting the original color of the at least one pixel in the target part of the face image includes: extracting the original color of the at least one pixel in the target part of the face image according to a transparency of the at least one pixel in the target material.

In a possible implementation, the method further includes: obtaining an initial position of the target part in the face image by identifying the target part in the face image; obtaining an original target material corresponding to the target part according to the target part; obtaining a standard material image by fusing the original target material with a target part in a preset face image; and extracting the target material from the standard material image based on the initial position.

In a possible implementation, the beauty makeup operation includes a lip makeup operation, and the target part comprises a lip part.

According to an aspect of the present disclosure, a device for image processing is provided. The device includes: an original extracting module, a luminance information acquisition module, a target color determination module and a fusion module.

The tracting module is configured to, in response to a beauty makeup operation for a target part of a face image, extract an original color of at least one pixel in the target part of the face image. The luminance information acquisition module is configured to acquire luminance information of the at least one pixel in the target part. The target color determination module is configured to determine a target color of the at least one pixel in the target part based on the original color and the luminance information. The fusion module is configured to obtain a fused face image by fusing the original color and the target color of the at least one pixel in the target part.

According to an aspect of the present disclosure, an electronic device is provided. The electronic device includes: a processor; and a memory configured to store instructions executable by the processor, herein the processor is configured to execute the above method for image processing.

According to an aspect of the present disclosure, provided is a computer-readable storage medium having stored thereon computer program instructions that, when executed by a processor, implement the above method for image processing.

According to an aspect of the present disclosure, a computer program product is provided. The computer program product includes computer-readable codes, or a non-volatile computer-readable storage medium carrying the computer-readable codes that when running in a processor of an electronic device, cause the processor of the electronic device to perform the above method for image processing.

In embodiments of the present disclosure, in response to a beauty makeup operation for a target part of a face image, an original color of at least one pixel in the target part of the face image is extracted, the luminance information of the at least one pixel in the target part is acquired, and a target color of the at least one pixel in the target part is determined based on the original color and the luminance information, so as to fuse the original color and the target color of at least one pixel in the target part to obtain a fused face image. Through the above processes, the luminance information of at least one pixel in the target part can be introduced to adjust the original color to obtain the target color, so that the color in the fused face image which fuses the original color and the target color has a more real gloss effect, and the effect and authenticity of the fused face image are improved.

It is to be understood that the above general description and detailed description below are only exemplary and explanatory and are not intended non limit the present disclosure. According to the following detailed description of the exemplary embodiments with reference to the accompanying drawings, other characteristics and aspects of the present disclosure will become apparent.

BRIEF DESCRIPTION OF THE DRAWINGS

The drawings herein are incorporated into and constitute a part of the specification, which illustrate embodiments in accordance with the disclosure and together with the specification serve to explain the technical solutions of the embodiments of the disclosure.

FIG. 1 illustrates a flow chart of a method for image processing according to an embodiment of the present disclosure.
FIG. 2 illustrates a schematic diagram of the target material according to an embodiment of the present disclosure.
FIG. 3 illustrates a schematic diagram of a constructed triangular grid according to an embodiment of the present disclosure.
Fig. 4 illustrates a schematic diagram of a preset face image according to an embodiment of the present disclosure.
FIG. 5 illustrates a schematic diagram of a color lookup table according to an embodiment of the present disclosure.
FIG. 6 illustrates a schematic diagram of the fused face image according to an embodiment of the present disclosure.
FIG. 7 illustrates a schematic diagram of the fused face image according to an embodiment of the present disclosure.
FIG. 8 illustrates a schematic diagram of the fused face image according to an embodiment of the present disclosure.
FIG. 9 illustrates a block diagram of a device for image processing according to an embodiment of the present disclosure.
FIG. 10 illustrates a schematic diagram of an application example of the present disclosure.
FIG. 11 illustrates a block diagram of an electronic device according to an embodiment of the present disclosure.
FIG. 12 illustrates a block diagram of an electronic device according to an embodiment of the present disclosure.

DETAILED DESCRIPTION

Various exemplary embodiments, features and aspects of the present disclosure will be described below in detail with reference to the accompanying drawings. A same numeral reference in the accompanying drawings indicates a same or similar component. Although various aspects of the embodiments are illustrated in the accompanying drawings, the accompanying drawings are unnecessarily drawn to scale unless otherwise specified.

As used herein, the word "exemplary" means "serving as an example, embodiment, or illustration". Any embodiment described herein as "exemplary" is not necessarily to be construed as preferred or advantageous over other embodiments.

The term "and/or" in this specification only describes an association relationship of associated objects and represents that three relationships may exist. For example, A and/or B may represent the following three cases: only A exists, both A and B exist, and only B exists. In addition, the term "at least one" herein represents any one of multiple, or any combination of at least two in the multiple, for example, at least one of A, B and C may represent any one or multiple elements selected from a set formed by A, B and C.

In addition, for better describing the disclosure, many specific details are presented in the following detailed description. It is to be understood by those skilled in the art that the present disclosure may still be implemented even without some specific details. In some examples, methods, means, components and circuits known very well to those skilled in the art are not described in detail, to highlight the subject of the present disclosure.

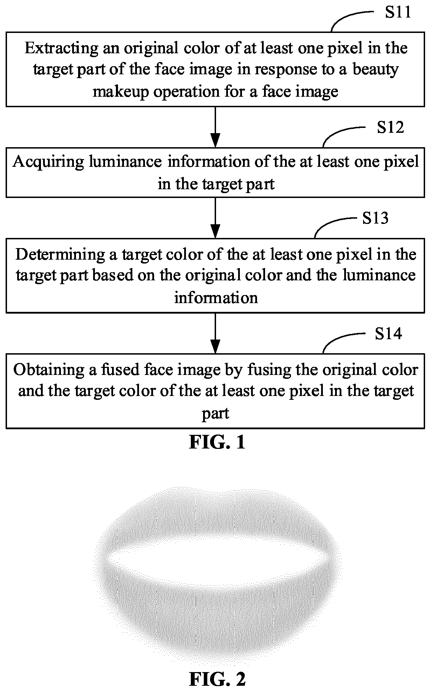

FIG. 1 illustrates a flowchart of a method for image processing according to an embodiment of the present disclosure. The method may be applied to an image processing device, an image processing system, etc. The image processing device may be a terminal device, a server, or other processing devices. The terminal device can be a User Equipment (UE), a mobile device, a user terminal, a terminal, a cellular phone, a cordless phone, a Personal Digital Assistant (PDA), a handheld device, a computing device, a vehicle-mounted device, a wearable device, etc. In an example, the image processing method can be applied to a cloud server or a local server, and the cloud server can be a public cloud server or a private cloud server, which can be flexibly selected according to the actual situation.

In some possible implementations, the method for image processing may also be implemented by a processor calling computer-readable instructions stored in memory.

As illustrated in FIG. 1, in a possible implementation, the image processing method includes steps S11 to S14.

At step S11, in response to a beauty makeup operation for a target part of a face image, an original color of at least one pixel in the target part of the face image is extracted.

The face image can be any image including a face, and the face image can include one face or a plurality of faces, and the implementation form can be flexibly determined according to the actual situation, and is not limited in the embodiment of the present disclosure.

The operation content included in the beauty makeup operation for a face image can be flexibly determined according to an actual situation and is not limited to the following embodiments. In a possible implementation, the beauty makeup operation may include an operation indicating beauty makeup processing for a face image. In a possible implementation, the beauty makeup operation may also include selecting a color for beauty makeup, etc. In a possible implementation, the beauty makeup operation may also include an operation indicating a processing type of the beauty makeup, etc.

The form of the beauty makeup operation can be flexibly determined according to the actual situation and is not limited to the following embodiments. In a possible implementation, the beauty makeup operation may include a lip makeup operation.

With the different forms of beauty makeup operation, the processing types included in the beauty makeup operation can also change flexibly. In a possible implementation, the beauty makeup operation can include one processing type, and in some possible implementations, the beauty makeup operation can also include multiple processing types. In a possible implementation, in the case where the beauty makeup operation includes a lip makeup operation, the processing type may include at least one of a matte lighting effect, a hydrating lighting effect, or a flashing lighting effect. The matte lighting effect may include the modification of lip color and the change of lighting effect to obtain the matte lip makeup effect with low gloss. The hydrating lighting effect may include the modification of lip color and the change of lighting effect to obtain a hydrating lip makeup effect with high gloss and natural luminance transition. The flashing effect may include lip color modification and the change of luminance effect to obtain flashing lip makeup effect with high luminance, high gloss and the luminance interval.

The target part can be any part in the face image that needs beauty makeup, and the implementation of which parts that the target part includes can also be flexibly determined according to the actual situation of beauty makeup operation. In a possible implementation, when the beauty makeup operation includes lip makeup operation, the target part may include lip part.

The original color may be the unprocessed color of the target part in the face image, and the method of extracting the original color of at least one pixel from the target part of the face image is not limited in the embodiment of the present disclosure, and can be flexibly determined according to the actual situation. In some possible implementations, an area where the target part is located in the face image may be determined, and colors of one or more pixels included in the area may be extracted to obtain an original color of at least one pixel in the target part of the face image.

At step S12, the luminance information of the at least one pixel in the target part is acquired.

The luminance information may be related information determined according to the colors of pixels in the target part of the face image, and the information content included in the luminance information can be flexibly determined according to the actual situation. The information types included in the luminance information and how to acquire the luminance information of the pixel are described in detail in the following embodiments and will not be expanded herein.

At step S13, a target color of the at least one pixel in the target part is determined based on the original color and the luminance information.

The target color may correspond to the original color and be related to the luminance information, so that the luminance situation may be reflected based on the correspondence with the original color to implement the corresponding processing effect. In some possible implementations, the original color may be adjusted according to the luminance information to obtain the target color, and in some possible implementations, the color corresponding to the original color may be obtained, and then the color corresponding to the original color may be adjusted according to the luminance information to obtain the target color, etc. The processing manner of how to obtain the target color of at least one pixel in the target part according to the original color and the luminance information can be flexibly determined according to the information content included in the luminance information, and the details may refer to the following embodiments and will not be expanded herein.

At step S14, a fused face image is obtained by fusing the original color and the target color of the at least one pixel in the target part.

The operation of fusing the original color of at least one pixel in the target part and the target color may be that the fusion process is performed for a plurality of pixels in the target part respectively. Herein, in the case when a pixel is fused, the target color of the pixel determined based on the original color may be fused with the original color of the pixel to obtain the fused color of the pixel, and then a fused face image can be obtained.

The fusion manner in step S14 can be flexibly changed according to the actual situation, and the details may refer to the following embodiments and will not be expanded herein.

In embodiments of the present disclosure, in response to a beauty makeup operation for a target part of a face image, an original color of at least one pixel in the target part of the face image is extracted, the luminance information of the at least one pixel in the target part is acquired, and a target color of the at least one pixel in the target part is determined based on the original color and the luminance information, so as to fuse the original color and the target color of at least one pixel in the target part to obtain a fused face image. Through the above processes, the luminance information of at least one pixel in the target part can be introduced to adjust the original color to obtain the target color, so that the color in the fused face image which fuses the original color and the target color has a more real gloss effect, and the effect and authenticity of the fused face image are improved.

In a possible implementation, step S 11 may includes the following operations.

A target material corresponding to the target part is obtained.

The original color of the at least one pixel in the target part of the face image is extracted according to a transparency of the at least one pixel in the target material.

The target material can be related material for implementing beauty makeup for the face image, and the implementation form of the target material can be flexibly determined according to the actual situation of beauty makeup operation. In a possible implementation, in the case where the beauty makeup operation includes a lip makeup operation, the target material may be a lip makeup material, such as a lip mask, etc.

In a possible implementation, the target material can be the material selected by the user in the beauty operation. In some possible implementations, the target material can also be a preset material, and is automatically called when the beauty makeup operation is selected. In some possible implementations, the target material can also be the material obtained after that the original material is processed based on the face image. The implementation of how to acquire the material may refer to the following embodiments and will not be expanded herein.

After obtaining the target material corresponding to the target part, the original color of the at least one pixel in the target part of the face image may be extracted according to a transparency of the at least one pixel in the target material. The extraction manner can be flexibly determined according to the actual situation. In a possible implementation, in a case when the transparency of the pixel in the target material falls within a preset transparency range, the area, corresponding to the position of the pixel, in the face image can be determined as an image area where the target part is located, and the original colors of a plurality of pixels in the image area can be extracted.

The specific range of the preset transparency range can be flexibly determined according to the actual situation. In a possible implementation, the preset transparency range can be set to be less than 100%. That is, in a case when the transparency of the pixel in the target material is less than 100% (not fully transparent), the area, corresponding to the position of the pixel, in the face image can be determined as the image area where the target part is located, and the original color of the pixel in the image area can be extracted. In a possible implementation, the preset transparency range may be set to be lower than other transparency values, or within a certain transparency range, etc. The embodiment of the present disclosure does not limit the range value of the preset transparency range.

In a case when the transparency of the pixel in the target material falls within the preset transparency range, the original color of the pixel corresponding to the face image is extracted. Through the above processes, the image area, where the target part is located, that meets the requirements can be determined more pertinently by setting the value of the preset transparency range, so as to extract a more accurate original color in the target part from the face image, thereby improving the reliability and authenticity of the subsequently obtained fused face image.

FIG. 2 illustrates a schematic diagram of a target material according to an embodiment of the present disclosure. As can be seen from the figure, in an example, the target material can be a lip mask, and the transparencies of different pixels in the lip mask are different, such that a natural and real lip shape can be represented better. Therefore, the original color in the face image extracted based on the lip mask is more accurate and reliable.

The target material corresponding to the target part is obtained, and the original color of the at least one pixel in the target part of the face image may be extracted according to a transparency of the at least one pixel in the target material. Through the above processes, more authentic and reliable original color corresponding to the real position of the lip in the face image can be extracted, and then the subsequent fused face image obtained based on the original color is more authentic and natural.

In a possible implementation, the method provided in the present disclosure further includes: obtaining an initial position of the target part in the face image by identifying the target part in the face image.

The initial position can be the approximate position where the target part is located in the face image and determined according to the face image. The method of determining the initial position of the target part is not limited in the present embodiment, can be flexibly selected according to the actual situation, and is not limited to the following embodiments.

In a possible implementation, the initial position of the target part can be determined by identifying the key points of the target part. For example, the initial position can be determined according to the coordinates of the identified key points of the target part in the face image; or the range of the target part in the face image may be determined according to the identified key points of the target part, so as to obtain the initial position of the target part.

In a possible implementation, the operation of obtaining an initial position of the target part in the face image by identifying the target part in the face image may include the following operations.

At least one face key point in the face image is acquired.

The triangular grid corresponding to the target part is constructed in the face image according to the face key point.

The initial position of the target part in the face image is determined according to the position coordinate of the triangular grid.

The face key point may be related key point for locating the key area in the human face, such as eye key point, mouth key point, eyebrows key point or nose key point, etc. The specific key point and the number of key points included in the obtained face key points are not limited in the embodiment of the present disclosure, and can be flexibly selected according to the actual situation. In some possible implementations, all relevant key points in the face image can be acquired, and the number of key points acquired may be between 100 and 300, for example, 106 face key points (Face 106) in the face may be included, or 240 or 282 face key points may be included, etc. In some possible implementations, part key points in the face image may be obtained, such as key points related to target part, such as key points related to lip, etc.

The method of acquiring the face key point is not limited in the embodiment of the present disclosure, and any method that can identify the face key point in an image can be used as an implementation method of acquiring the face key point.

After acquiring at least one face key point, the triangular grid may be constructed in the face image according to the face key point. The method of constructing the triangular grid is not limited in the embodiment of the present disclosure. In a possible implementation, every three adjacent points of the acquired face key points can be connected to obtain a plurality of triangular grids. In some possible implementations, interpolation processing can be performed according to the acquired face key points first to obtain interpolation points, and then in the point set including the face key points and interpolation points, every three adjacent points are connected to obtain multiple triangular grids.

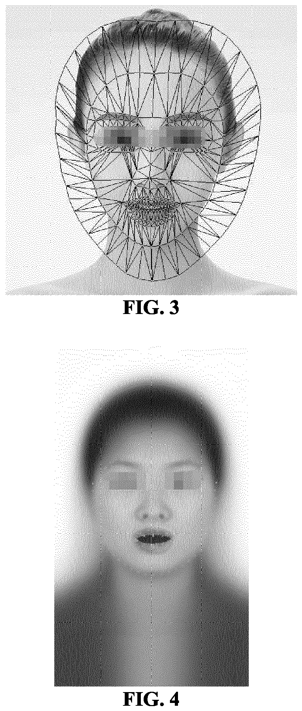

FIG. 3 illustrates a schematic diagram of a constructed triangular grid according to an embodiment of the present disclosure (parts of the face in the figure are mosaicked to protect the object in the image). It can be seen from the figure that in a possible implementation, multiple triangular grids can be obtained by connecting the key points of the face image and the interpolation points.

In a possible implementation, a triangular grid corresponding to the target part is constructed in the face image according to the key points of face. The method of constructing the triangular grid can refer to the above embodiments, and the difference is that the face key points and interpolation points related to the target part can be obtained to construct the triangular grid corresponding to the target part, while the construction of the triangular grid for other parts in the face image may be omitted.

After obtaining the triangular grid corresponding to the target part, the initial position of the target part in the face image may be determined according to the position coordinates of the triangular grid in the face image. The representation form of the initial position is not limited in the embodiment of the present disclosure. In a possible implementation, the center point positions of one or more triangular grids corresponding to the target part can be determined as the initial position of the target position. In a possible implementation, the coordinates of each vertex of one or more triangular grids corresponding to the target part can also be determined as the initial position of the target part. The representation form of the initial position can be flexibly selected according to the actual situation.

At least one face key point is acquired, the triangular grid corresponding to the target part may be constructed in the face image according to the face key point, such that the initial position of the target part in the face image can be determined. Through the above processes, the target part in the face image can be preliminarily located efficiently and accurately by means of key point identification and grid construction, so as to facilitate the subsequent acquisition of the target material matching with the target part, thereby improving the accuracy and authenticity of image processing.

In a possible implementation, the operation of acquiring the target material may include the following operations.

An original target material corresponding to the target part is obtained according to the target part.

A standard material image is obtained by fusing the original target material with a target part in a preset face image.

The target material is obtained by extracting for the standard material image based on the initial position.

The original target material can be a material that is preset and bound to the beauty makeup operation, for example, the original lip mask can be used as the original target material corresponding to the lip makeup operation. The manner of obtaining the original target material is not limited in the embodiment of the present disclosure. The material selected in the beauty operation can be used as the original target material, or the corresponding original target material can be automatically read according to the beauty operation.

The preset face image can be a standard face image template, and can include complete and comprehensive face parts, and the respective position of each face part in the preset face image is standard. The implementation form of the preset face image can be flexibly determined according to the actual situation, and any standard face used in the field of face image processing can be used as the implementation form of preset face image. FIG. 4 illustrates a schematic diagram of a constructed triangular grid according to an embodiment of the present disclosure (as the above-mentioned embodiment, some parts of the face in the figure are mosaicked to protect the object in the image). It can be seen from the figure that in an example, the face parts included in the preset face image are clear, complete and conform to the objective distribution of each face part of the face.

Since the respective position of each face part in the standard face image is standard, the original target material may be fused directly with the position corresponding the target part in the preset face image to obtain a standard material image. The manner of fusing the original target material and the target part in the preset face image is not limited in the embodiment of the present disclosure. In a possible implementation, the original target material can be directly superimposed with the pixel values of the corresponding pixels in the target part of the preset face image to obtain the standard material image. In some possible implementations, the original target material and the pixel values of the corresponding pixels in the target parts in the preset face image can also be weighted and superimposed according to the preset weight to implement fusion.

A standard material image may be obtained by fusing the original target material with a target part in a preset face image. In a possible implementation, the target material may be extracted from the standard material image based on the initial position in the above-mentioned embodiments.

In a possible implementation, the method of extracting the target material based on the initial position may include: acquiring the color value and transparency of each pixel within the range corresponding to the initial position in the standard material image, and determining an image formed by a plurality of pixels including the color values and transparencies as the target material.

The standard material image is obtained by fusing the original target material with the target part in the preset face image. The target material is extracted from the standard material image based on the initial position. Since the initial position is obtained according to the recognition of the target part in the face image, the obtained target material can be more corresponding to the position where the target part is located in the face image through the above processes, so that the original color of at least one pixel in the extracted target part is more real and reliable.

In a possible implementation, the luminance information comprises at least one of: a first luminance, a second luminance, or a third luminance, and step S12 may include the following operations.

A processing type of the beauty makeup operation is identified, and at least one of the first luminance, the second luminance, or the third luminance of the at least one pixel is extracted in at least one processing manner according to the processing type.

The at least one processing manner may include at least one of:

determining the first luminance of the pixel according to the original color of the pixel;
determining the second luminance of the pixel having a target luminance in a preset processing range according to the preset processing range of the pixel in the target part; or
filtering the pixel through a preset convolution kernel, and determining the third luminance of the pixel according to an intermediate color obtained by filtering the pixel, wherein a filtering range of the preset convolution kernel is same as the preset processing range.

The first luminance may be a luminance value determined according to the color value of the original color of the pixel. Herein the luminance value may be determined by calculating the color value. In an example, the luminance value may be calculated according to the values of three color channels (red R, green G, and blue B) in the color value.

The second luminance may also be determined according to the color value of the pixel having the target luminance. Herein the pixel having the target luminance may be the pixel within the preset processing range of the pixel and having the highest luminance in the target part of the face image. The range value of the preset processing range can be flexibly set according to the actual situation, which is not limited in the embodiment of the present disclosure.

The third luminance may be a luminance value determined according to a color value of an intermediate color of a pixel. Herein, the intermediate color of the pixel may be a color obtained by filtering the pixel through a preset convolution kernel. The form and value of the preset convolution kernel can be flexibly set according to the actual situation. In a possible implementation, the filtering range of the preset convolution kernel is same as the preset processing range in the above-mentioned embodiment. That is, in an example, on the one hand, the pixel can be filtered through the preset convolution kernel to obtain the intermediate color of the pixel after filtering, and the corresponding luminance value is calculated according to the color value of the intermediate color and used as the third luminance. On the other hand, the area covered by filtering the pixel through the preset convolution kernel can be used as the preset processing range, such that the luminance value of the pixel which is located within the preset processing range and has the highest luminance in the target part of the face image can be used as the second luminance.

The filtering manner is not limited in the embodiment of the present disclosure, and can be flexibly selected according to the actual situation. In an example, Gaussian filtering can be performed for the pixel through the preset convolution kernel.

The implementation of the processing type can refer to the above-mentioned embodiments and will not be elaborated herein. With different processing type, the luminance type included in the acquired luminance information may change, and the correspondence relationship between the acquired luminance information and the processing type can be flexibly determined according to the actual situation, and is not limited to the following embodiments. In a possible implementation, in a case where the processing type comprises a matte lighting effect, the luminance information includes the first luminance and the third luminance. In a possible implementation, in a case where the processing type comprises a hydrating lighting effect and/or a flashing lighting effect, the luminance information includes the first luminance, the second luminance and the third luminance.

In the above-mentioned embodiments, the acquired number and order of the first luminance, the second luminance and the third luminance are not limited in the embodiment of the present disclosure. In the case of obtaining a plurality of luminances among the first luminance, the second luminance and the third luminance, a plurality of luminances can be obtained simultaneously, or a plurality of luminances can be obtained in sequence according to a certain order, which can be flexibly selected according to actual situations.

The initial target color of the pixel is adjusted according to a first luminance determined according to the original color of the pixel, a second luminance determined according to the preset processing range of the pixel in the target part, and the third luminance determined according to the color value of the pixel after filtering, and the luminance information of the pixel in the face image in a certain range can be fully considered, so that the target color determined based on the luminance information can be more authentic and reliable, and can meet the needs of lighting effect processing, thereby improving the beauty makeup effect and authenticity of the fused face image.

In a possible implementation, step S13 may include steps S131 and S132.

At step S131, an initial target color of the at least one pixel in the target part is obtained by performing color search for the original color of the at least one pixel in the target part according to a selected color in the beauty makeup operation, and. Herein the initial target color matches the original color.

At step S 132, the target color of the at least one pixel in the target part is obtained by adjusting the initial target color based on the luminance information.

The color selected in the beauty makeup operation may be the color which is selected by the user for beauty makeup while selecting the beauty makeup operation, or the corresponding color which is preset and bound to the beauty makeup operation when selecting the beauty makeup operation. The specific color value of the color can be flexibly determined according to the actual situation, which is not limited in the embodiment of the present disclosure.

The initial target color may be the determined color which is searched within the selected color based on the original color, the initial target color can be enabled to fall within the range of the selected color and be matched with the original color through the color search based on the selected color and the original color. The matching between the initial target color and the original color can be that the respective pixel values of the two colors correspond to each other through a certain color mapping relationship, or the initial target color and the original color are the same color, etc.

The searching manner of how to perform color searching for the initial color of at least one pixel in the target part according to the selected color and the original color can be flexibly determined according to actual situations, and can refer to the following embodiments and will not be expanded herein.

After the initial target color is determined, the initial target color can be adjusted based on the luminance information to obtain the target color. In some possible implementations, during the process of adjusting the initial target color according to the luminance information, the adjustment manner can be flexibly selected according to the processing type corresponding to the beauty makeup operation, so as to obtain the target color having a corresponding gloss effect and suitable for the processing type. The implementation of how to obtain the target color by further adjusting according to the initial target color can also refer to the following embodiments and will not be expanded herein.

The color search is performed for the original color of the at least one pixel in the target part according to a selected color in the beauty makeup operation, an initial target color of the at least one pixel in the target part is obtained, and the target color may be obtained by adjusting for the initial target color according to the luminance information. Through the above processes, on the one hand, color search can be used to obtain the target color which falls within the range of the selected color and corresponds to the original color, so that the color of the target color is more real, and the color transition between different pixels is more natural, thereby improving the natural degree and beauty makeup effect of the fused face image. On the other hand, the initial target color can be adjusted flexibly by introducing luminance information, so as to obtain the target color that meets the needs of gloss effect.

In a possible implementation, step S131 may include the following operations.

A color lookup table corresponding to the selected color is acquired according to the selected color in the beauty makeup operation, herein output colors in the color lookup table are arranged in a gradient form.

An output color corresponding to the original color of the at least one pixel in the target part is searched in the color lookup table, and the output color is determined as the initial target color of the at least one pixel in the target part.

The color lookup table may include a corresponding relationship between a plurality of input colors and output colors. The input color can be the color to be searched in the color lookup table, and the output color can be the color searched out from the color lookup table. For example, an output color B corresponding to the input color A can be found by looking up in the color lookup table based on the input color A. The corresponding relationship between the colors in the color lookup table can be flexibly set according to the actual situation, which is not limited in the embodiment of the present disclosure. In a possible implementation, the output colors in the color lookup table may be arranged in a gradient form, and the specific arrangement manner is not limited in the present embodiments and is not limited to the following embodiments.

In a possible implementation, the color lookup table corresponding to the selected color may be obtained according to the selected color in the beauty makeup operation. In this case, the output color in the color lookup table is within the corresponding selected color, therefore, the initial target color searched according to the color lookup table can be within the corresponding range of the selected color and correspond to the original color.

After obtaining the color lookup table, the respective output color corresponding to each pixel can be searched from the color lookup table according to the original colors of a plurality of pixels in the target position, and the output colors can be used as the initial target colors of a plurality of pixels in the target position. The search manner can be flexibly determined according to the form of the color lookup table and is not limited in the embodiment of the present disclosure.

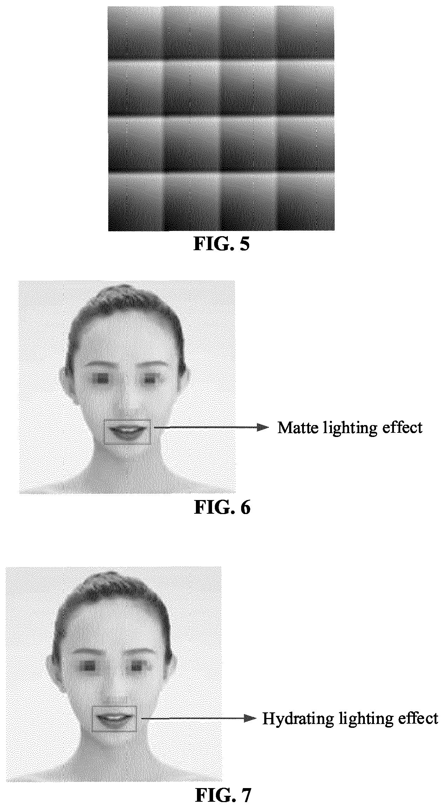

FIG. 5 illustrates a schematic diagram of a color lookup table according to an embodiment of the present disclosure. As can be seen from the figure, in an example, the color lookup table includes multiple natural transition gradient colors as the output colors (due to the limitation of gray image display, colors with different shades in the image are actually color-differentiated gradient colors). After obtaining the original colors of a plurality of pixels in the target part, the output colors of the plurality of pixels can be respectively searched from the color lookup table as the initial target colors.

A color lookup table including multiple gradient output colors and corresponding to the selected color is obtained according to the selected color in the beauty maekup operation. The output color corresponding to the original color of at least one pixel in the target part is respectively searched in the color lookup table as an initial target color of at least one pixel in the target site. Through the above processes, the initial target color with natural color transition can be obtained by using the color lookup table including gradient output colors, so that the transition of the subsequently obtained target color is more natural, and the natural degree and beauty effect of the obtained fused face image are improved.

The implementation form of step S132 may be flexibly varied with different luminance information and the processing type. In a possible implementation, in a case where the processing type comprises a matte lighting effect, step S132 may include the following operations.

In a case where the first luminance is greater than a preset luminance threshold, the target color of the pixel is obtained by adjusting the initial target color of the pixel according to the first luminance and the preset luminance threshold.

Alternatively, in a case where the first luminance is less than or equal to the preset luminance threshold, the target color of the pixel is obtained by adjusting the initial target color of the pixel according to the first luminance and the third luminance.

The value of the preset luminance threshold can be flexibly set according to the actual situation, which is not limited in the embodiment of the present disclosure.

The initial target color of the pixel may be adjusted with different manners and by selecting different data according to the comparison result between the first luminance and the preset luminance threshold, so as to obtain the target color of the pixel.

The manner for adjusting the initial target color can be flexibly determined according to the actual situation, which is not limited to the embodiments described below. In a possible implementation, no matter which data is used to adjust the initial target color of the pixel to obtain the target color, the process may be summarized as the following process. That is, in a possible implementation, the initial target color of the pixel is adjusted to obtain the target color of the pixel may include the following operations.

The adjustment coefficient for adjusting the initial target color is determined according to the corresponding data.

The initial target color of the pixel is adjusted according to the adjusting coefficient and the preset light source value to obtain the target color of the pixel.

The adjustment coefficient can be related parameter in the process of adjusting the initial target color. The calculation manner of the adjustment coefficient may be flexibly changed with different processing type and comparison result, which is not limited to the following embodiments. In a possible implementation, in the case when the processing type is matte lighting effect and the first luminance is greater than the preset luminance threshold, the adjustment coefficient can be determined according to the first luminance and the preset luminance threshold, and the determination manner can be flexibly selected according to the actual situation, and is not limited to the following embodiments. In a possible implementation, the manner of determining the adjustment coefficient according to the first luminance and the preset luminance threshold can be represented by the following formula (1):

$$\text{Adjustment coefficient} = (\text{first luminance-preset luminance threshold}) \times (-1.0)/(1.0- \text{preset luminance threshold}) \qquad (1)$$

In a possible implementation, in the case when the processing type is matte lighting effect and the first luminance is less than or equal to the preset luminance threshold, the adjustment coefficient can be determined according to the first luminance and the preset luminance threshold, and the determination manner can be flexibly selected according to the actual situation, and is not limited to the following embodiments. In a possible implementation, in the above case, the manner of determining the adjustment coefficient according to the first luminance and the third luminance can be represented by the following formula (2):

$$\text{Adjustment coefficient} = \text{first luminance-third luminance} \qquad (2)$$

After determining the adjustment coefficient, the target color of the pixel can be determined according to the adjustment coefficient and a preset light source value. The preset light source value can be a light source value flexibly set for the beauty makeup operation according to the actual situation, and its value is not limited in the embodiment of the present disclosure.

The manner that the initial target color is adjusted based on the adjustment coefficient and the preset light source value can also be flexibly set according to the actual situation, and is not limited to the following embodiments. In an example, the manner that the target color is determined based on the adjustment coefficient and the preset light source value can be represented by the following formula (3):

$$\text{Target color} = \text{initial target color} + \text{adjustment coefficient} \times \text{preset light source value} \qquad (3)$$

Through the above processes, in the case where the processing type is matte lighting effect, the initial target color can be flexibly adjusted according to the luminance information of pixel according to the comparison result between the first luminance and the preset luminance threshold, so as to reduce the glossiness and luminance of the target color, thereby obtaining a fused face image with better matte lighting effect.

In a possible implementation, in a case where the processing type includes a hydrating lighting effect, step S 132 may include the following operations.

In a case where the first luminance is greater than the third luminance, the target color of the pixel is obtained by adjusting the initial target color of the pixel according to the first luminance, the second luminance, the third luminance and a preset luminance radius.

Alternatively, in a case where the first luminance is less than or equal to the third luminance, the initial target color of the pixel is determined as the target color of the pixel.

The preset luminance radius can determine the radius of the bright spot in the lighting effect, and the value of the preset luminance radius can be flexibly set according to the actual situation, and is not limited in the embodiment of the present disclosure.

In a case where the processing type is a hydrating lighting effect, the initial target color of the pixel may be adjusted with different manners and by selecting different data according to the comparison result between the first luminance and the third luminance, so as to obtain the target color of the pixel.

The method for adjusting the initial target color can refer to the above embodiments, that is, the adjustment coefficient can be determined first, and then the target color can be determined based on the adjustment coefficient and the preset light source value.

In a possible implementation, in the case when the processing type is hydrating lighting effect, and the first luminance is greater than the third luminance, the adjustment coefficient can be determined according to the first luminance, the second luminance and the third luminance, and the determination manner can be flexibly selected according to the actual situation, and is not limited to the following embodiments. In a possible implementation, in the case when the processing type is hydrating lighting effect, the manner of determining the adjustment coefficient according to the first luminance, the second luminance, the third luminance and a preset luminance radius can be represented by the following formula (4):

$$\text{Adjustment coefficient} = \text{pow} \left( (\text{first luminance} - \text{third luminance})/(\text{second luminance} - \text{third luminance}), \text{shiness} \right) \qquad (4)$$

where pow (x, y) indicates the result of calculating $x^y$, and shining is the preset luminance radius.

After the adjustment coefficient is determined through the above manner, the manner that the target color is determined based on the adjustment coefficient may refer to the above embodiments and will not be described herein.

In a possible implementation, in the case where the processing type is hydrating lighting effect, and the first luminance is less than or equal to the third luminance, the adjustment coefficient can be directly determined as 0. In this case, through the manner for determining the target color based on the adjustment coefficient as mentioned in the above formula (3), it can be seen that in the case where the adjustment coefficient is 0, the target color can be directly equal to the initial target color. Therefore, in this case, the initial target color of the pixel can be determined as the target color of the pixel.

Through the above processes, in the case where the processing type is hydrating lighting effect, the initial target color can be flexibly adjusted according to the luminance information of pixel according to the comparison result between the first luminance and the third luminance, such that the color adjustment results of different pixels may be as coherent as possible while the glossiness and luminance of the target color are improved, thereby obtaining a fused face image with better hydrating lighting effect.

In a possible implementation, in a case where the processing type includes a flashing lighting effect, step S 132 may include the following operations.

In a case where the first luminance is greater than the third luminance, the target color of the pixel is obtained by adjusting the initial target color of the pixel according to the first luminance, the second luminance, the third luminance and a preset luminance radius.

Alternatively, in a case where the first luminance is less than or equal to the third luminance, a random value within a first preset value range is generated; and the target color of the at least one pixel in the target part is obtained by adjusting the initial target color according to the random value.

The preset luminance radius may refer to the above-mentioned embodiments. It is to be noted that the values of the preset luminance radius may be the same or different in different processing types, which is not limited in the embodiments of the present disclosure.

In a case where the processing type is a flashing lighting effect, the initial target color of the pixel may be adjusted with different manners and by selecting different data according to the comparison result between the first luminance and the third luminance, so as to obtain the target color of the pixel.

The method for adjusting the initial target color can refer to the above embodiments, that is, the adjustment coefficient can be determined first, and then the target color can be determined based on the adjustment coefficient and the preset light source value.

In a possible implementation, in the case when the processing type is flashing lighting effect, and the first luminance is greater than the third luminance, the adjustment coefficient can be determined according to the first luminance, the second luminance, the third luminance and a preset luminance radius, and the determination manner can be flexibly selected according to the actual situation, and is not limited to the following embodiments. In a possible implementation, the manner of determining the adjustment coefficient according to the first luminance, the second luminance, the third luminance and a preset luminance radius in the case where the processing type is flashing lighting effect may be the same as the manner of determining the adjustment coefficient according to the first luminance, the second luminance, the third luminance and a preset luminance radius in the case where the processing type is hydrating lighting effect, which may be refer to the above-mentioned embodiments and formula (4) and will not be elaborated herein.

After the adjustment coefficient is determined through the above manner, the manner that the target color is determined based on the adjustment coefficient may also refer to the above embodiments and will not be elaborated herein.

In a possible implementation, in a case where the processing type is flashing lighting effect and the first luminance is less than or equal to the third luminance, the adjustment coefficient may be further determined according to the generated random value, and the target color may be determined based on the adjustment coefficient with the manner provided in the above-described embodiments.

The random value may be randomly generated data information, and the manner of generating the random value is not limited in the embodiments of the disclosure and is not limited to the following embodiments. In a possible implementation, a first preset value range may be set in advance, and a random value may be generated randomly within the first preset value range. The specific data range of the first preset value range can be flexibly selected according to the actual situation. In an example, the first preset value range can be set to [0.0, 1.0].

After generating the random value, the implementation of how to determining the adjustment coefficient based on the random value to implement the adjustment for the initial target color may be flexibly determined according to the actual situations, and may refer to the following embodiments and will not be expanded herein.

Through the above processes, in the case where the processing type is flashing lighting effect, the initial target color can be flexibly adjusted according to the luminance information of pixel and the generated random value according to the comparison result between the first luminance and the third luminance, so as to the flashing gloss effect may be implemented while improving the glossiness and luminance of the target color, thereby obtaining a fused face image with better matte lighting effect.

In a possible implementation, the operation of obtaining the target color of the at least one pixel in the target part by adjusting the initial target color according to the random value may include the following operations.

In a case where the random value falls within the second preset value range, the target color of the pixel is obtained by adjusting the initial target color of the pixel according to the random value and a corresponding transparency of the pixel in the target material.

Alternatively, in a case where the random value falls outside the second preset value range, the initial target color of the pixel is determined as the target color of the pixel.

The second preset value range can also be a preset value range, and the range value of the second preset value range should fall within the first preset value range. The specific data range of the second preset value range can also be flexibly selected according to the actual situation. In an example, the second preset value range can be set to [0.99, 1.0].

The implementation of the target material can refer to the above-mentioned embodiments and will not be elaborated herein. In a possible implementation, the pixel corresponding to the position of pixel in the target part can be determined in the target material according to the position correspondence relationship between the target part and the target material, and the transparency of the corresponding pixel in the target material can be determined as the corresponding transparency of the pixel in the target material.

In a case where the random value falls within the second preset value range, the adjustment coefficient may be determined according to the random value and a corresponding transparency of the pixel in the target material. The manner of determining the adjustment coefficient according to the random value and the transparency can be flexibly determined according to the actual situation, and is not limited to the following embodiments. In a possible implementation, the manner of determining the adjustment coefficient according to the random value and the transparency can be represented by the following formula (5):

$$\text{Adjustment coefficient} = \text{random value} \times \text{pow (transparency, T)} \qquad (5)$$

where T is the preset value, and the specific value can be flexibly set according to the actual situation, for example, it can be within the range between 2 to 5. In an example, the value of T can be 4.0. The calculation method of pow can refer to the above embodiments and will not be elaborated herein.

After determining the adjustment coefficient based on the random value and transparency through the above-mentioned embodiments, the initial target color can be further adjusted by the manner proposed in the above-mentioned embodiments to obtain the target color, and the specific manner will not be elaborated herein.

In the case where the random value falls outside the second preset value range, the adjustment coefficient can be directly determined as 0. In this case, through the manner for determining the target color based on the adjustment coefficient as mentioned in the above formula (3), it can be seen that in the case where the adjustment coefficient is 0, the target color can be directly equal to the initial target color. Therefore, in this case, the initial target color of the pixel can be determined as the target color of the pixel.

In an embodiment of the present disclosure, the adjustment manner of the initial target color is flexibly changed by comparing the generated random value with the second preset value range. Through the above processes, different pixels can be adjusted in different ways through randomly generated values, so as to better simulate the flashing situation and obtain a more natural and realistic fused face image with flashing lighting effect.

After obtaining the target color, the original color and the target color may be fused by step S14. In a possible implementation, step S14 may include the following operations.

A first fusion ratio of the original color and a second fusion ratio of the target color are determined respectively according to a preset fusion intensity.

The fused face image is obtained by fusing the original color and the target color according to the first fusion ratio and the second fusion ratio.

The preset fusion intensity is used to indicate the respective fusion ratio or weight of each of the original color and the target color in the fusion process, and its value can be flexibly set according to the actual situation. In a possible implementation, the respective fusion weight of each of the original color and the target color can be set in advance as the preset fusion intensity. In a possible implementation, the beauty makeup operation for the face image may also include a selection intensity for the fusion intensity, in this case, the selected fusion intensity in the beauty makeup operation may be determined as the preset fusion intensity.

The first ratio may be the fusion ratio of the original color in the fusion process, The second ratio may be the fusion ratio of the target color in the fusion process. After determining the first fusion ratio and the second fusion ratio respectively according to the preset fusion intensity, the original color and the target color can be fused with each other according to the corresponding fusion ratios to obtain a fused face image. In the process of fusing according to the fusion ratios, the fusion can be performed directly through superposition, or by some other manners, such as image processing method of positive film superimposed or soft light etc. The specific selection of the fusion manner is also not limited in the embodiment of the present disclosure.

A first fusion ratio of the original color and a second fusion ratio of the target color are respectively determined according to the preset fusion intensity. The original color and the target color are fused according to the corresponding fusion ratios to obtain the fused face image. Through the above processes, the preset fusion intensity can be flexibly set according to the actual needs, so as to obtain the fused face image whose fusion intensity and effect meet the requirements, such that the flexibility of image processing is improved.

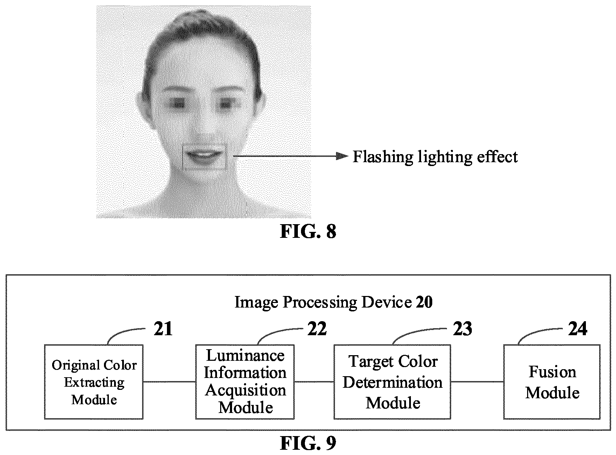

The final obtained fused face image may be changed flexibly with the different processing types in beauty makeup operation. FIG. 6 to FIG. 8 illustrate schematic diagrams of a fused face image according to an embodiment of the present disclosure (as the above-mentioned embodiment, some parts of the face in the figure are mosaicked to protect the object in the image). Herein, FIG. 6 is a fused face image obtained under the processing manner of matte lighting effect; FIG. 7 is a fused face image obtained under the processing manner of hydrating lighting effect; FIG. 8 is a fused face image obtained under the processing manner of flashing lighting effect. It can be seen from the above images that a fused face image which is more real and natural and has a better fusing effect can be obtained through the image processing method provided by the above-mentioned embodiments.

FIG. 9 illustrates a block diagram of a device for image processing according to an embodiment of the present disclosure. As illustrated in the figure, the image processing device 20 includes a traction module 21, a luminance information acquisition module 22, a target color determination module 23 and a fusion module 24.

The original extracting module 21 is configured to, in response to a beauty makeup operation for a target part of a face image, extract an original color of at least one pixel in the target part of the face image.

The luminance information acquisition module 22 is configured to acquire luminance information of the at least one pixel in the target part.

The target color determination module 23 is configured to determine a target color of the at least one pixel in the target part based on the original color and the luminance information.

The fusion module 24 is configured to obtain a fused face image by fusing the original color and the target color of the at least one pixel in the target part.

In a possible implementation, the target color determination module is configured to: determine an initial target color of the at least one pixel in the target part by performing the color search for the original color of the at least one pixel in the target part according to a selected color in the beauty makeup operation, herein the initial target color matches the original color, and obtain the target color of the at least one pixel in the target part by adjusting the initial target color based on the luminance information.

In a possible implementation, the luminance information includes at least one of a first luminance, a second luminance, or a third luminance. The luminance information acquisition module is configured to: identify a processing type of the beauty makeup operation, and extract at least one of the first luminance, the second luminance, or the third luminance of the at least one pixel in at least one processing manner according to the processing type. at least one processing manner comprises at least one of determining the first luminance of the pixel according to the original color of the pixel; obtaining the second luminance of the pixel having a target luminance in a preset processing range according to the preset processing range of the pixel in the target part; or filtering the pixel through a preset convolution kernel, and determining the third luminance of the pixel according to an intermediate color obtained by filtering the pixel, herein a filtering range of the preset convolution kernel is same as the preset processing range.

In a possible implementation, the processing type includes a matte lighting effect, and the luminance information includes the first luminance and the third luminance. The target color determination module is further configured to: in a case where the first luminance is greater than a preset luminance threshold, obtain the target color of the pixel by adjusting the initial target color of the pixel according to the first luminance and the preset luminance threshold; or in a case where the first luminance is less than or equal to the preset luminance threshold, obtain the target color of the pixel by adjusting the initial target color of the pixel according to the first luminance and the third luminance.

In a possible implementation, the processing type includes a hydrating lighting effect and the luminance information includes the first luminance, the second luminance and the third luminance. The target color determination module is further configured to: in a case where the first luminance is greater than the third luminance, obtain the target color of the pixel by adjusting the initial target color of the pixel according to the first luminance, the second luminance, the third luminance and a preset luminance radius; or in a case where the first luminance is less than or equal to the third luminance, determine the initial target color of the pixel as the target color of the pixel.

In a possible implementation, the processing type includes a flashing lighting effect and the luminance information includes the first luminance, the second luminance, and the third luminance. The target color determination module is further configured to: in a case where the first luminance is greater than the third luminance, obtain the target color of the pixel by adjusting the initial target color of the pixel according to the first luminance, the second luminance, the third luminance and a preset luminance radius; or in a case where the first luminance is less than or equal to the third luminance, generate a random value within a first preset value range, and obtain the target color of the at least one pixel in the target part by adjusting the initial target color according to the random value.

In a possible implementation, the target color determination module is further configured to: in a case where the random value falls within the second preset value range, obtain the target color of the pixel by adjusting the initial target color of the pixel according to the random value and a corresponding transparency of the pixel in the target material; or in a case where the random value falls outside the second preset value range, the initial target color of the pixel is determined as the target color of the pixel.

In a possible implementation, the target color determination module is further configured to: acquire a color lookup table corresponding to the selected color according to the selected color in the beauty makeup operation, herein output colors in the color lookup table are arranged in a gradient form; search for an output color corresponding to the original color of the at least one pixel in the target part in the color lookup table, and determine the output color as the initial target color of the at least one pixel in the target part.

In a possible implementation, the fusion module is configured to: determine a first fusion ratio of the original color and a second fusion ratio of the target color respectively according to a preset fusion intensity; and obtain the fused face image by fusing the original color and the target color according to the first fusion ratio and the second fusion ratio.

In a possible implementation, the original extracting module is configured to: obtain a target material corresponding to the target part; and extract the original color of the at least one pixel in the target part of the face image according to a transparency of the at least one pixel in the target material.

In a possible implementation mode, the device is further configured to obtain an initial position of the target part in the face image by identifying the target part in the face image. The original extracting module is further configured to: obtain an original target material corresponding to the target part according to the target part; obtain a standard material image by fusing the original target material with a target part in a preset face image; and obtain the target material by extracting for the standard material image based on the initial position.

In a possible implementation, the beauty makeup operation may include a lip makeup operation, and the target part includes a lip part.

Application Scenario Example

In the field of computer vision, how to obtain a more realistic and natural image after the lip makeup process has become an urgent problem to be solved.

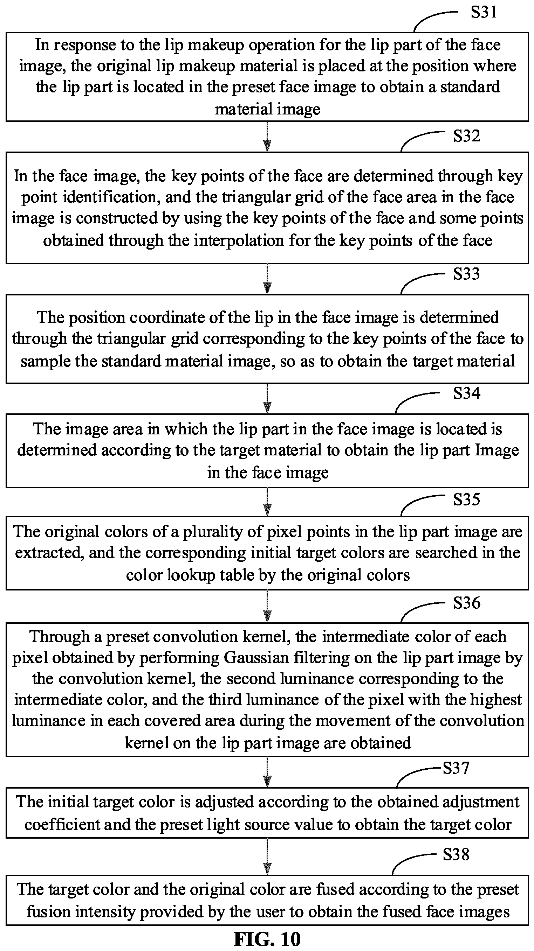

FIG. 10 illustrates a schematic diagram of an application example of the present disclosure. As illustrated in the figure, a method for image processing. The method includes steps S31 to S37.

At step S31, in response to the lip makeup operation for the lip part of the face image, the original lip makeup material (lip makeup mask in FIG. 2) is placed at the position where the lip part is located in the preset face image as illustrated in FIG. 4 to obtain a standard material image.

At step S32, in the face image, the key points of the face are determined through key point identification, and the triangular grid of the face region in the face image illustrated in FIG. 3 is constructed by using the key points of the face and some points obtained through the interpolation for the key points of the face.

At step S33, the position coordinate of the lip in the face image is determined through the triangular grid corresponding to the key points of the face to sample the standard material image, so as to obtain the target material.

At step S34, the image area in which the lip part in the face image is located is determined according to the target material, and the image of the lip part in the face image is obtained.

At step S35, the original colors of a plurality of pixels in the lip part image are extracted, and the corresponding initial target colors are searched in the color lookup table by the original colors.

Ar step S36, through a preset convolution kernel, the intermediate color of each pixel after Gaussian filtering is performed for the lip part image by the convolution kernel, the second luminance corresponding to the intermediate color, and the third luminance of the pixel with the highest luminance in each covered area during the movement of the convolution kernel on the lip part image are obtained.

At step S37, the initial target color is adjusted according to the obtained adjustment coefficient and the preset light source value to obtain the target color. The method for obtaining the target color can refer to the formula (3) in the above-mentioned embodiments, and the method for obtaining the adjustment coefficient can refer to the following examples in detail.

In the case of performing matte lighting effect processing on the lip part in the face image, an adjustment coefficient for an initial target color can be obtained by the following manners: if a first luminance of a pixel (a luminance value corresponding to a color value of a pixel) is greater than a preset luminance threshold, the adjustment coefficient is calculated through the formula (1) mentioned in the above embodiment; and if the first luminance of the pixel is less than or equal to a preset luminance threshold, the adjustment coefficient is calculated through formula (2) mentioned in the above embodiment.

In the case where the hydrating lighting effect processing is performed on the lip part in the face image, the adjustment coefficient for the initial target color can be obtained by the following manners: if the first luminance of the pixel is greater than the third luminance, the adjustment coefficient is calculated through the formula (4) mentioned in the above embodiment; and if the first luminance of the pixel is less than or equal to the third luminance, the adjustment coefficient is set to a first preset value, the value of the first preset value can be flexibly set according to the actual situation, such as any value within [0, 0.1], in an example, the preset value of the adjustment coefficient can be set to 0.

In the case where the flashing lighting effect processing is performed on the lip part in the face image, the adjustment coefficient for the initial target color can be obtained by the following manners: if the first luminance of a pixel is greater than the third luminance, the adjustment coefficient is also calculated through the formula (4) mentioned in the above embodiment; and if the first luminance of the pixel is less than or equal to the third luminance, a random value within the first preset value range is generated, and it is determined whether the random value is within the second preset value range, if the random value is within the second preset value range, the adjustment coefficient is calculated through the formula (5) mentioned in the above embodiment; and if the random value is not within the second preset value range, the adjustment coefficient is set to a second preset value, the value of the second preset value can also be flexibly set according to the actual situation, and can be the same as or different from the first preset value, the value range of the second preset value can also be within [0, 0.1], in an example, the second preset value can also be set to 0.

At step S38, the target color and the original color are fused according to the preset fusion intensity provided by the user to obtain the fused face images as illustrated in FIG. 6 to FIG. 8.

According to the method provided by the application example of the present disclosure, the fused target color can be adjusted according to the luminance information of the face image to obtain the gloss effect conforming to the beauty makeup processing type, so that the obtained face fusion image is more authentic and reliable and meets the needs of users.

The image processing method provided in the application example of the present disclosure may be not only applied to the lip makeup processing for the lip part in the face image, but also extended to other beauty makeup operations, such as blush or eye shadow, or other beauty makeup operations. The image processing method provided by the application example of the present disclosure can be flexibly expanded and modified accordingly with different beauty makeup operation types.

It is to be understood that the method embodiments mentioned in the present disclosure may be combined with each other to form a combined embodiment without departing from the principle and logic, which is not elaborated in the embodiments of the present disclosure for the sake of simplicity.

It may be understood by the person skilled in the art that in the method of the specific implementation, the writing sequence of various actions does not mean a strict sequence of execution to form any limit to the implementation process, and the specific sequence of executing the actions may be determined in terms of the function and possible internal logic.

In embodiments of the present disclosure, further provided is a computer-readable storage medium having stored thereon computer program instructions that, when is executed by a processor, implement the above method. The computer-readable storage medium may be a volatile computer-readable storage medium or a non-volatile computer-readable storage medium.

In embodiments of the present disclosure, further provided is an electronic device, which includes: a processor; and a memory configured to store instructions executable by the processor, the processor being configured to execute the above method.

In embodiments of the present disclosure, further provided is a computer program product comprising computer-readable code, or a non-volatile computer-readable storage medium carrying the computer-readable code which, when executed in a processor of the electronic device, causes the processor of the electronic device to perform the above method.

In practical applications, the memory may be a volatile memory, such as Random Access Memory (RAM); or a non-volatile memory, such as Read Only Memory (ROM), flash memory, Hard Disk Drive (HDD) or Solid-State Drive (SSD); or a combination of the above kinds of memories, and provide instructions and data to the processor.

The above-mentioned processor may be at least one of Application Specific Integrated Circuit (ASIC), Digital Signal Processing (DSP), DSPD, Programmable Logic Device (PLD), Field Programmable Gate Arry (FPGA), Central Processing Unit (CPU), controller, microcontroller or microprocessor. It is to be understood that the electronic device for implementing the above-mentioned processor functions may be other devices for different apparatus, and is not limited in the embodiments of the present disclosure.

The electronic device may be provided as a terminal, a server or other forms of devices.

Based on the same technical concept as the foregoing embodiments, embodiments of the present disclosure further provide a computer program that implements the above method when executed by a processor.

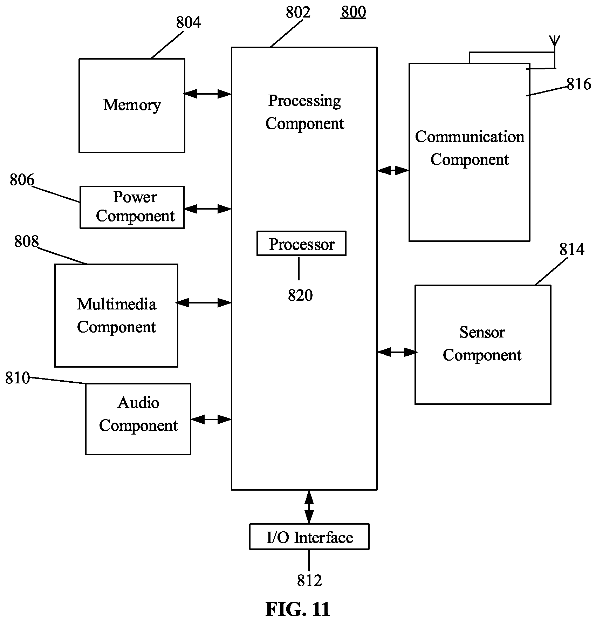

FIG. 11 illustrates a block diagram of an electronic device 800 according to an embodiment of the present disclosure. For example, the electronic device 800 may be a terminal such as a mobile phone, a computer, a digital broadcast terminal, a messaging device, a gaming console, a tablet, a medical device, exercise equipment, and a personal digital assistant.

Referring to FIG. 10, the electronic device 800 may include one or more of the following components: a processing component 802, a memory 804, a power component 806, a multimedia component 808, an audio component 810, an Input/Output (I/O) of interface 812, a sensor component 814, and a communication component 816.

The processing component 802 typically controls overall operations of the electronic device 800, such as the operations associated with display, telephone calls, data communications, camera operations, and recording operations. The processing component 802 may include one or more processors 820 to execute instructions to perform all or part of the actions in the above described methods. Moreover, the processing component 802 may include one or more modules which facilitate the interaction between the processing component 802 and other components. For example, the processing component 802 may include a multimedia module to facilitate the interaction between the multimedia component 808 and the processing component 802.

The memory 804 is configured to store various types of data to support the operation of the electronic device 800. Examples of such data include instructions for any program or method operated on the electronic device 800, contacts data, phonebook data, messages, pictures, video, etc. The memory 804 may be implemented by any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, a magnetic or optical disk.

The power component 806 provides power to various components of the electronic device 800. The power component 806 may include a power management system, one or more power sources, and any other components associated with the generation, management and distribution of power in the electronic device 800.

The multimedia component 808 includes a screen providing an output interface between the electronic device 800 and the user. In some embodiments, the screen may include a Liquid Crystal Display (LCD) and a Touch Panel (TP). If the screen includes a TP, the screen may be implemented as a touch screen to receive input signals from the user. The TP includes one or more touch sensors to sense touches, swipes and gestures on the TP. The touch sensors may not only sense a boundary of a touch or swipe action, but also sense a duration and a pressure associated with the touch or swipe action. In some embodiments, the multimedia component 808 includes a front camera and/or a rear camera. The front camera and/or the rear camera may receive external multimedia data while the electronic device 800 is in an operation mode, such as a photographing mode or a video mode. Each of the front camera and the rear camera may be a fixed optical lens system or have focus and optical zooming capability.

The audio component 810 is configured to output and/or input audio signals. For example, the audio component 810 includes a Microphone (MIC) configured to receive an external audio signal when the electronic device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, or a button. The button may include, but is not limited to, a home button, a volume button, a starting button, and a lock button.

The sensor component 814 includes one or more sensors to provide status assessments of various aspects of the electronic device 800. For example, the sensor component 814 may detect an open/closed status of the electronic device 800, and relative positioning between components. For example, the component is the display and the keypad of the electronic device 800. The sensor component 814 may also detect a change in position of the electronic device 800 or a component of the electronic device 800, a presence or absence of user contact with the electronic device 800, an orientation or an acceleration/deceleration of the electronic device 800, and a change in temperature of the electronic device 800. The sensor component 814 may include a proximity sensor configured to detect the presence of nearby objects without any physical contact. The sensor component 814 may also include a light sensor, such as a Complementary Metal Oxide Semiconductor (CMOS) or Charge Coupled Device (CCD) image sensor, for use in imaging applications. In some embodiments, the sensor component 814 may also include an acceleration sensor, a gyroscope sensor, a magnetic sensor, a pressure sensor, or a temperature sensor.

The communication component 816 is configured to facilitate wired or wireless communication between the electronic device 800 and other devices. The electronic device 800 may access a wireless network based on a communication standard, such as Wireless Fidelity (WiFi), a 2nd-generation (2G) network or a 3rd-generation (3G) network, or a combination thereof. In an exemplary embodiment, the communication component 816 receives a broadcast signal from an external broadcast management system or broadcast associated person information via a broadcast channel. In an exemplary embodiment, the communication component 816 further includes a Near Field Communication (NFC) module to facilitate short-range communications. For example, the NFC module may be implemented based on a Radio Frequency Identification (RFID) technology, an Infrared Data Association (IrDA) technology, an Ultra-Wideband (UWB) technology, a Bluetooth (BT) technology, and other technologies.

In an exemplary embodiment, the electronic device 800 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors, or other electronic elements, for performing the above described methods.

In an exemplary embodiment, a non-volatile computer-readable storage medium, for example, a memory 804 including computer program instructions, is also provided. The computer program instructions may be executed by a processor 820 of an electronic device 800 to implement the above-mentioned method.

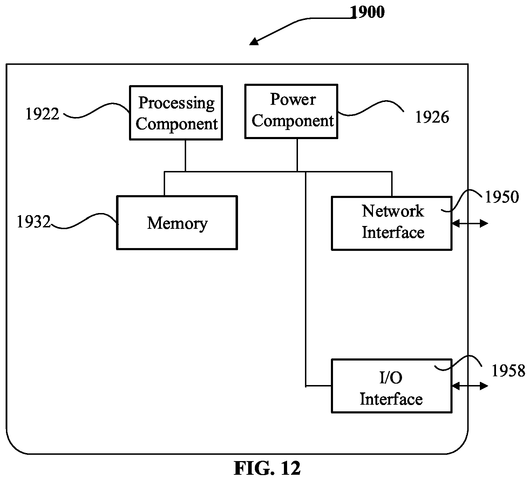

FIG. 12 illustrates a block diagram of an electronic device 1900 according to an embodiment of the present disclosure. For example, the electronic device 1900 may be provided as a server. Referring to FIG. 12, the electronic device 1900 includes: a processing component 1922 further including one or more processors; and a memory resource represented by a memory 1932, configured to store instructions executable for the processing component 1922, for example, an application. The application stored in the memory 1932 may include one or more modules, with each module corresponding to one group of instructions. In addition, the processing component 1922 is configured to execute the instructions to perform the above-mentioned method.

The electronic device 1900 may further include a power component 1926 configured to execute power management of the electronic device 1900, a wired or wireless network interface 1950 configured to connect the electronic device 1900 to a network and an I/O interface 1958. The electronic device 1900 may be operated based on an operating system stored in the memory 1932, for example, Windows ServerTM, Mac OS XTM, UnixTM, LinuxTM, FreeBSDTM or other operating systems.

In an exemplary embodiment, a non-volatile computer-readable storage medium, for example, a memory 1932 including computer program instructions, is also provided. The computer program instructions may be executed by a processor component 1922 of an electronic device 1900 to implement the above-mentioned method.

The present disclosure may lie in a system, a method and/or a computer program product. The computer program product may include a computer-readable storage medium, in which computer-readable program instructions configured to enable a processor to implement each aspect of the present disclosure is stored.

The computer-readable storage medium may be a tangible device capable of retaining and storing instructions used by an instruction execution device. The computer-readable storage medium may be, but not limited to, an electric storage device, a magnetic storage device, an optical storage device, an electromagnetic storage device, a semiconductor storage device or any appropriate combination thereof. More specific examples (non-exhaustive list) of the computer-readable storage medium include a portable computer disk, a hard disk, a Random Access Memory (RAM), a ROM, an EPROM (or a flash memory), an SRAM, a Compact Disc Read-Only Memory (CD-ROM), a Digital Video Disk (DVD), a memory stick, a floppy disk, a mechanical coding device, a punched card or in-slot raised structure with instructions stored therein, and any appropriate combination thereof. Herein, the computer-readable storage medium is not explained as a transient signal, for example, radio waves or other freely propagating electromagnetic waves, electromagnetic waves propagating through a waveguide or another transmission medium (for example, an optical pulse propagating through an optical fiber cable) or an electric signal transmitting through an electric wire.

The computer-readable program instructions described here may be downloaded from the computer-readable storage medium to each computing/processing device or downloaded to an external computer or an external storage device through a network such as an Internet, a Local Area Network (LAN), a Wide Area Network (WAN) and/or a wireless network. The network may include a copper transmission cable, an optical fiber transmission cable, a wireless transmission cable, a router, a firewall, a switch, a gateway computer and/or an edge server. A network adapter card or network interface in each computing/processing device receives the computer-readable program instructions from the network and forwards the computer-readable program instructions for storage in the computer-readable storage medium in each computing/processing device.

The computer program instructions configured to execute the operations of the present disclosure may be assembly instructions, an Instruction Set Architecture (ISA) instructions, machine instructions, machine related instructions, microcode, firmware instructions, state setting data or source code or target code edited by any combination of one or more programming languages, the programming language including an object-oriented programming language such as Smalltalk and C++ and a conventional procedural programming language such as "C" language or a similar programming language. The computer-readable program instructions may be completely or partially executed in a computer of a user, executed as an independent software package, executed partially in the computer of the user and partially in a remote computer, or executed completely in the remote server or a server. In a case involving the remote computer, the remote computer may be connected to the user computer via a type of network including the LAN or the WAN, or may be connected to an external computer (such as using an Internet service provider to provide the Internet connection). In some embodiments, an electronic circuit, such as a programmable logic circuit, a Field Programmable Gate Array (FPGA) or a Programmable Logic Array (PLA), is customized by using state person information of the computer-readable program instructions. The electronic circuit may execute the computer-readable program instructions to implement each aspect of the present disclosure.

Herein, each aspect of the present disclosure is described with reference to flowcharts and/or block diagrams of the method, device (system) and computer program product according to the embodiments of the present disclosure. It is to be understood that each block in the flowcharts and/or the block diagrams and a combination of each block in the flowcharts and/or the block diagrams may be implemented by computer-readable program instructions.

These computer-readable program instructions may be provided for a processor of a universal computer, a dedicated computer or another programmable data processing device, thereby generating a machine to further generate a device that realizes a function/action specified in one or more blocks in the flowcharts and/or the block diagrams when the instructions are executed through the processor of the computer or the other programmable data processing devices. These computer-readable program instructions may also be stored in a computer-readable storage medium, and through these instructions, the computer, the programmable data processing device and/or another device may work in a specific manner, so that the computer-readable medium including the instructions includes a product including instructions for implementing each aspect of the function/action specified in one or more blocks in the flowcharts and/or the block diagrams.

These computer-readable program instructions may also be loaded to the computer, the other programmable data processing device or the other device, so that a series of operating steps are executed in the computer, the other programmable data processing device or the other device to generate a process implemented by the computer to further realize the function/action specified in one or more blocks in the flowcharts and/or the block diagrams by the instructions executed in the computer, the other programmable data processing device or the other device.

The flowcharts and block diagrams in the drawings illustrate architectures, functions and operations that may be implemented by the system, method and computer program product according to multiple embodiments of the present disclosure. On this aspect, each block in the flowcharts or the block diagrams may represent part of a module, a program segment or instructions, and part of the module, the program segment or the instructions includes one or more executable instructions configured to realize a specified logical function. In some alternative implementations, the functions marked in the blocks may also be realized in a sequence different from those marked in the drawings. For example, two continuous blocks may actually be executed in a substantially concurrent manner and may also be executed in a reverse sequence sometimes, which is determined by the involved functions. It is further to be noted that each block in the block diagrams and/or the flowcharts and a combination of the blocks in the block diagrams and/or the flowcharts may be implemented by a dedicated hardware-based system configured to execute a specified function or operation or may be implemented by a combination of a special hardware and a computer instruction.

Various embodiments of the present disclosure have been described above. The above descriptions are exemplary, non-exhaustive and also not limited to various embodiments of the disclosure above. Many modifications and variations would be apparent to those of ordinary skill in the art without departing from the scope and spirit of each described embodiment of the present disclosure. The terms used herein are selected to explain the principle and practical application of each embodiment or technical improvements in the technologies in the market best or enable others of ordinary skill in the art to understand the embodiments disclosed herein.

**Claims**

1.   A method for image processing, comprising:

in response to a beauty makeup operation for a target part of a face image, extracting an original color of at least one pixel in the target part of the face image;
acquiring luminance information of the at least one pixel in the target part;
determining a target color of the at least one pixel in the target part based on the original color and the luminance information; and
obtaining a fused face image by fusing the original color of the at least one pixel in the target part and the target color.

2. The method of claim 1, wherein determining the target color of the at least one pixel in the target part based on the original color and the luminance information comprises:

determining an initial target color of the at least one pixel in the target part by performing color search for the original color of the at least one pixel in the target part according to a selected color in the beauty makeup operation, wherein the initial target color matches the original color; and
obtaining the target color of the at least one pixel in the target part by adjusting the initial target color based on the luminance information.

3. The method of claim 2, wherein the luminance information comprises at least one of: a first luminance, a second luminance, or a third luminance;
wherein acquiring the luminance information of the at least one pixel in the target part comprises:

identifying a processing type of the beauty makeup operation, and extracting at least one of the first luminance, the second luminance, or the third luminance of the at least one pixel in at least one processing manner according to the processing type; and
wherein the at least one processing manner comprises at least one of
determining the first luminance of a pixel according to the original color of the pixel;
acquiring the second luminance of the pixel having a target luminance in a preset processing range according to the preset processing range of the pixel in the target part; or
filtering the pixel through a preset convolution kernel, and determining the third luminance of the pixel according to an intermediate color obtained by filtering the pixel, wherein a filtering range of the preset convolution kernel is same as the preset processing range.

4. The method of claim 3, wherein the processing type comprises a matte lighting effect, and the luminance information comprises the first luminance and the third luminance; and
wherein obtaining the target color of the at least one pixel in the target part by adjusting the initial target color based on the luminance information comprises:

in a case where the first luminance is greater than a preset luminance threshold, obtaining the target color of the pixel by adjusting the initial target color of the pixel according to the first luminance and the preset luminance threshold; or
in a case where the first luminance is less than or equal to the preset luminance threshold, obtaining the target color of the pixel by adjusting the initial target color of the pixel according to the first luminance and the third luminance.

5. The method of claim 3 , wherein the processing type comprises a hydrating lighting effect; the luminance information comprises: the first luminance, the second luminance, and the third luminance; and
wherein obtaining the target color of the at least one pixel in the target part by adjusting the initial target color based on the luminance information comprises:

in a case where the first luminance is greater than the third luminance, obtaining the target color of the pixel by adjusting the initial target color of the pixel according to the first luminance, the second luminance, the third luminance and a preset luminance radius; or
in a case where the first luminance is less than or equal to the third luminance, determining the initial target color of the pixel as the target color of the pixel.

6. The method of claim 3 , wherein the processing type comprises a flashing lighting effect; the luminance information comprises: the first luminance, the second luminance, and the third luminance; and
wherein obtaining the target color of the at least one pixel in the target part by adjusting the initial target color based on the luminance information comprises:

in a case where the first luminance is greater than the third luminance, obtaining the target color of the pixel by adjusting the initial target color of the pixel according to the first luminance, the second luminance, the third luminance and a preset luminance radius; or
in a case where the first luminance is less than or equal to the third luminance, generating a random value within a first preset value range; and obtaining the target color of the at least one pixel in the target part by adjusting the initial target color according to the random value.

7. The method of claim 6, wherein obtaining the target color of the at least one pixel in the target part by adjusting the initial target color according to the random value comprises:

in a case where the random value falls within the second preset value range, obtaining the target color of the pixel by adjusting the initial target color of the pixel according to the random value and a transparency of the pixel in a target material; or
in a case where the random value falls outside the second preset value range, determining the initial target color of the pixel as the target color of the pixel.

8. The method of any one of claims 2-7, wherein determining the initial target color of the at least one pixel in the target part by performing color search for the original color of the at least one pixel in the target part according to the selected color in the beauty makeup operation comprises:

acquiring a color lookup table corresponding to the selected color according to the selected color in the beauty makeup operation, wherein output colors in the color lookup table are arranged in a gradient form; and
searching for an output color corresponding to the original color of the at least one pixel in the target part in the color lookup table, and determining the output color as the initial target color of the at least one pixel in the target part.

9. The method of any one of claims 1-8, wherein obtaining the fused face image by fusing the original color of the at least one pixel in the target part and the target color comprises:

determining a first fusion ratio of the original color and a second fusion ratio of the target color according to a preset fusion intensity, respectively; and
obtaining the fused face image by fusing the original color and the target color according to the first fusion ratio and the second fusion ratio.

10. The method of any one of claims 1-9, wherein in response to the beauty makeup operation for the target part of the face image, extracting the original color of the at least one pixel in the target part of the face image comprises:

obtaining a target material corresponding to the target part; and
extracting the original color of the at least one pixel in the target part of the face image according to a transparency of the at least one pixel in the target material.

11. The method of claim 10, wherein the method further comprises:

obtaining an initial position of the target part in the face image by identifying the target part in the face image; and
wherein obtaining the target material corresponding to the target part comprises:

obtaining an original target material corresponding to the target part according to the target part;
obtaining a standard material image by fusing the original target material with a target part in a preset face image; and
extracting the target material from the standard material image based on the initial position.

12. The method of any one of claims 1-11, wherein the beauty makeup operation comprises a lip makeup operation, and the target part comprises a lip part.

13. A device for image processing, comprising:

an original extracting module, configured to, in response to a beauty makeup operation for a target part of a face image, extract an original color of at least one pixel in the target part of the face image;
a luminance information acquisition module, configured to acquire luminance information of the at least one pixel in the target part;
a target color determination module, configured to determine a target color of the at least one pixel in the target part based on the original color and the luminance information; and

a fusion module, configured to obtain a fused face image by fusing the original color and the target color of the at least one pixel in the target part.

14. An electronic device, comprising:

a processor; and
a memory for storing instructions executable by the processor;
wherein the processor is configured to invoke the instructions stored in the memory to perform the method of any one of claims 1-12.

15. A computer-readable storage medium having stored thereon computer program instruction that when executed by a processor, implement the method of any one of claims 1-12.

16. A computer program product, comprising computer-readable codes, or a non-volatile computer-readable storage medium carrying the computer-readable codes, wherein when the computer-readable codes are running in a processor of an electronic device, the processor of the electronic device implement the method of any one of claims 1-12.

S11

Extracting an original color of at least one pixel in the target part of the face image in response to a beauty makeup operation for a face image

S12

Acquiring luminance information of the at least one pixel in the target part

S13

Determining a target color of the at least one pixel in the target part based on the original color and the luminance information

S14

Obtaining a fused face image by fusing the original color and the target color of the at least one pixel in the target part

**FIG. 1**

**FIG. 2**

**FIG. 3**

**FIG. 4**

FIG. 5

Matte lighting effect

FIG. 6

Hydrating lighting effect

FIG. 7

Flashing lighting effect

**FIG. 8**

**FIG. 9**

S31

In response to the lip makeup operation for the lip part of the face image, the original lip makeup material is placed at the position where the lip part is located in the preset face image to obtain a standard material image

S32

In the face image, the key points of the face are determined through key point identification, and the triangular grid of the face area in the face image is constructed by using the key points of the face and some points obtained through the interpolation for the key points of the face

S33

The position coordinate of the lip in the face image is determined through the triangular grid corresponding to the key points of the face to sample the standard material image, so as to obtain the target material

S34

The image area in which the lip part in the face image is located is determined according to the target material to obtain the lip part Image in the face image

S35

The original colors of a plurality of pixel points in the lip part image are extracted, and the corresponding initial target colors are searched in the color lookup table by the original colors

S36

Through a preset convolution kernel, the intermediate color of each pixel obtained by performing Gaussian filtering on the lip part image by the convolution kernel, the second luminance corresponding to the intermediate color, and the third luminance of the pixel with the highest luminance in each covered area during the movement of the convolution kernel on the lip part image are obtained

S37

The initial target color is adjusted according to the obtained adjustment coefficient and the preset light source value to obtain the target color

S38

The target color and the original color are fused according to the preset fusion intensity provided by the user to obtain the fused face images

**FIG. 10**

804

806

808

810

802     800

Memory

Power
Component

Multimedia
Component

Audio
Component

Processing
Component

Processor

820

I/O Interface

812

Communication
Component

816

Sensor
Component

814

**FIG. 11**

1900

1922 — Processing Component

Power Component — 1926

1932 — Memory

Network Interface ⌇ 1950

I/O Interface ⌇ 1958

**FIG. 12**

<table>
<tr><td colspan="2">**INTERNATIONAL SEARCH REPORT**</td><td colspan="2">International application No.<br>**PCT/CN2021/103249**</td></tr>
<tr><td colspan="4">**A. CLASSIFICATION OF SUBJECT MATTER**<br>G06T 3/00(2006.01)i; G06T 5/00(2006.01)i; G06T 1/00(2006.01)i<br><br>According to International Patent Classification (IPC) or to both national classification and IPC</td></tr>
<tr><td colspan="4">**B. FIELDS SEARCHED**</td></tr>
<tr><td colspan="4">Minimum documentation searched (classification system followed by classification symbols)<br>G06T</td></tr>
<tr><td colspan="4">Documentation searched other than minimum documentation to the extent that such documents are included in the fields searched</td></tr>
<tr><td colspan="4">Electronic data base consulted during the international search (name of data base and, where practicable, search terms used)<br>CNPAT, CNKI, WPI, EPODOC: 原始, 妆, 美妆, 美化, 化妆, PS, 唇, 部位, 嘴, 眼, 亮度, 色, 卷积核, 融合, 比例, 权重, 蒙版, 模板, Original, Colour, Color, Makeup, Lip, Brightness, Fusion, Ratio, Weight, table</td></tr>
<tr><td colspan="4">**C. DOCUMENTS CONSIDERED TO BE RELEVANT**</td></tr>
<tr><td>Category*</td><td colspan="2">Citation of document, with indication, where appropriate, of the relevant passages</td><td>Relevant to claim No.</td></tr>
<tr><td>PX</td><td colspan="2">CN 112767285 A (BEIJING SENSETIME TECHNOLOGY DEVELOPMENT CO., LTD.) 07 May 2021 (2021-05-07)<br>description, paragraphs [0005]-[0032]</td><td>1-16</td></tr>
<tr><td>X</td><td colspan="2">CN 111784568 A (BEIJING BYTEDANCE NETWORK TECHNOLOGY CO., LTD.) 16 October 2020 (2020-10-16)<br>description paragraphs [0034]-[0087]</td><td>1, 9-16</td></tr>
<tr><td>Y</td><td colspan="2">CN 111784568 A (BEIJING BYTEDANCE NETWORK TECHNOLOGY CO., LTD.) 16 October 2020 (2020-10-16)<br>description paragraphs [0034]-[0087]</td><td>2, 8</td></tr>
<tr><td>Y</td><td colspan="2">CN 107644396 A (VIVO COMMUNICATION TECHNOLOGY CO., LTD.) 30 January 2018 (2018-01-30)<br>description, paragraphs [0039]-[0049]</td><td>2, 8</td></tr>
<tr><td>A</td><td colspan="2">CN 111369644 A (BEIJING KUANGSHI TECHNOLOGY CO., LTD.) 03 July 2020 (2020-07-03)<br>entire document</td><td>1-16</td></tr>
<tr><td colspan="2">☑ Further documents are listed in the continuation of Box C.</td><td colspan="2">☑ See patent family annex.</td></tr>
<tr><td colspan="2">* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed</td><td colspan="2">"T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family</td></tr>
<tr><td colspan="2">Date of the actual completion of the international search<br>**29 October 2021**</td><td colspan="2">Date of mailing of the international search report<br>**23 November 2021**</td></tr>
<tr><td colspan="2">Name and mailing address of the ISA/CN<br><br>**China National Intellectual Property Administration (ISA/CN)**<br>**No. 6, Xitucheng Road, Jimenqiao, Haidian District, Beijing 100088, China**</td><td colspan="2">Authorized officer</td></tr>
<tr><td colspan="2">Facsimile No. **(86-10)62019451**</td><td colspan="2">Telephone No.</td></tr>
</table>

Form PCT/ISA/210 (second sheet) (January 2015)

**INTERNATIONAL SEARCH REPORT**

International application No.

**PCT/CN2021/103249**

**C.    DOCUMENTS CONSIDERED TO BE RELEVANT**

| Category* | Citation of document, with indication, where appropriate, of the relevant passages | Relevant to claim No. |
|---|---|---|
| A | CN 107610201 A (BEIJING XIAOMI MOBILE SOFTWARE CO., LTD.) 19 January 2018 (2018-01-19)<br>entire document | 1-16 |
| A | JP 2000011145 A (SHISEIDO CO., LTD.) 14 January 2000 (2000-01-14)<br>entire document | 1-16 |

Form PCT/ISA/210 (second sheet) (January 2015)

**Information on patent family members**

International application No.

**PCT/CN2021/103249**

| Patent document cited in search report | | | Publication date (day/month/year) | Patent family member(s) | | | Publication date (day/month/year) |
|---|---|---|---|---|---|---|---|
| CN | 112767285 | A | 07 May 2021 | None | | | |
| CN | 111784568 | A | 16 October 2020 | None | | | |
| CN | 107644396 | A | 30 January 2018 | CN | 107644396 | B | 02 February 2021 |
| CN | 111369644 | A | 03 July 2020 | WO | 2021169307 | A1 | 02 September 2021 |
| CN | 107610201 | A | 19 January 2018 | None | | | |
| JP | 2000011145 | A | 14 January 2000 | JP | 3723349 | B2 | 07 December 2005 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110203295